# EUROPÄISCHE PATENTSCHRIFT

(11) **EP 2 766 171 B1**
(45) Veröffentlichungstag und Bekanntmachung des Hinweises auf die Patenterteilung: **07.03.2018**
(21) Anmeldenummer: 12772757.6
(22) Anmeldetag: 05.10.2012
(51) Int. Cl.: B29C 65/60, B29C 65/08

(54) **VERFAHREN ZUM UMFORMEN EINES WERKSTÜCKS**
METHOD FOR SHAPING A WORKPIECE
PROCÉDÉ DE FORMAGE D'UNE PIECE

(30) Priorität: 10.10.2011 DE 102011054358
(43) Veröffentlichungstag der Anmeldung: 20.08.2014
(73) Patentinhaber: Herrmann Ultraschalltechnik GmbH & Co. KG, 76307 Karlsbad (DE)
(72) Erfinder: RIEHM, Ulf, 76275 Ettlingen (DE)
(74) Vertreter: WSL Patentanwälte Partnerschaft mbB
(86) Internationale Anmeldenummer: PCT/EP2012/069755
(87) Internationale Veröffentlichungsnummer: WO 2013/053652

(56) Entgegenhaltungen:
- EP-A1- 0 543 721
- EP-A2- 2 095 930
- FR-A- 1 424 663
- GB-A- 1 093 433
- JP-A- 1 210 329
- JP-A- 2 022 034
- JP-A- 10 230 378
- JP-A- 58 155 924
- JP-A- 61 197 223
- JP-A- 62 071 623
- JP-A- 2005 324 362
- US-A- 3 754 310
- US-A- 4 926 519
- "ULTRASONIC JOINING OF MOULDED PARTS AND SEMI-FINISHED PARTS OF THERMO-PLASTIC POLYMERS IN MASS PRODUCTION. \FORMING WITH ULTRASOUND. STAKING, SWAGING AND TAMPING (GUIDELINE DVS 2216, PART 3, 1992)", WELDING IN THE WORLD, ELSEVIER / INTERNATIONAL INSTITUTE OF WELDING, ROISSY, FR, Bd. 31, Nr. 3, 1. Mai 1993 (1993-05-01), Seiten 205-207, XP000362330, ISSN: 0043-2288

## Beschreibung

Die vorliegende Erfindung betrifft ein Verfahren zum Umformen eines Werkstückes, insbesondere ein Stauchnietverfahren.

Beim Umformen, d.h. bei einer gezielten plastischen Verformung eines Werkstückes, wird über ein Umformwerkzeug eine Kraft auf das Werkstück ausgeübt und dieses dadurch umgeformt. Man unterscheidet zwischen dem Druckumformen, dem Zugdruckumformen, dem Zugumformen, dem Biegeumformen und dem Schubumformen.

Insbesondere beim Druckumformen hat das Umformwerkzeug eine Stauchfläche mit einer Kontur, die im wesentlichen der gewünschten Außenkontur des umzuformenden Werkstückes entspricht. Diese Stauchfläche wird während des Umformens mit dem umzuformenden Werkstück in Kontakt gebracht und es wird eine Kraft auf das Werkstück aufgebracht, sodass dieses dadurch umgeformt wird.

Bei vielen Materialien ist es von Vorteil, wenn das umzuformende Werkstück während oder unmittelbar vor der Umformung erwärmt wird.

Für die Erwärmung des Werkstückes kann beispielsweise dem Werkstück eine Ultraschallschwingung, d.h. eine Schwingung zwischen etwa 16 kHz und etwa 10 GHz, aufgeprägt. Diese Ultraschallschwingung wird im Werkstück absorbiert und dieses dadurch erwärmt.

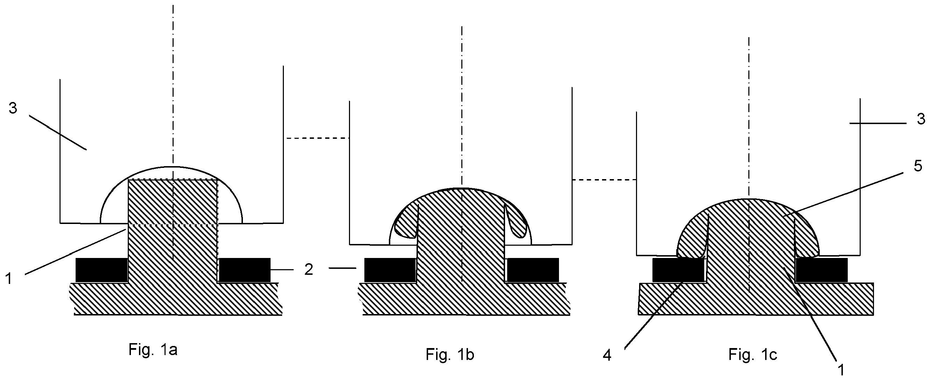

So ist es beispielsweise bekannt, einen Niet mit Hilfe eines als Sonotrode ausgebildeten Schließkopfformers umzuformen. In den Figuren 1a bis 1c sind schematisch die Verfahrensschritte gezeigt, die bei einem bekannten Umformverfahren zur Anwendung kommen.

Das bekannte Nietverfahren wird verwendet, um zwei Materialien bzw. zwei Elemente miteinander zu verbinden. Zunächst wird der aus einem Kunststoff bestehende Niet 1 durch eine im Nietgut 2 angeordnete Öffnung hindurchgeführt. Der Niet 1 ist entweder mit einem der beiden zu verbindenden Elemente verbunden oder weist einen vorgefertigten Setzkopf auf, der verhindert, dass der Niet 1 vollständig durch die im Nietgut 2 befindliche Öffnung hindurchgedrückt werden kann.

Wie in Figur 1 zu erkennen ist, wird in dieser Situation die Sonotrode 3, d.h. ein mit einer Ultraschallschwingung beaufschlagtes Element, in Richtung des Nietgutes 2 bewegt, sodass zunächst die Kanten der Stirnfläche des Niets 1 mit der Sonotrode 3 in Kontakt treten. Durch die Berührung der Sonotrode 3 mit dem Niet 1 wird eine Ultraschallschwingung in den Niet 1 übertragen. Die Ultraschallschwingung wird im Material absorbiert. Der Anteil der absorbierten Ultraschallenergie hängt von der Dämpfungskonstante bzw. dem Absorptionskoeffizient des Materials ab.

Im allgemeinen wird die Amplitude der Ultraschallschwingung im Werkstück abnehmen, so dass die größte Amplitude an der Kontaktfläche zur Sonotrode erreicht wird und umso kleiner wird, je weiter sich die Ultraschallwelle von der Sonotrode entfernt.

Durch die Absorption kommt es zu einer Erwärmung des Niets 1. Da der Niet 1 bei dem bekannten Verfahren aus einem Kunststoff besteht, wird das Material anschmelzen, wie in Figur 1b gezeigt und schließlich, wie in Figur 1c dargestellt ist, durch den Schließkopf umgeformt. Grundsätzlich ist es mit Hilfe von Ultraschall möglich, die umzuformenden Werkstücke sehr schnell und insbesondere nur lokal zu erhitzen, sodass die gewünschte Warmumformung erfolgen kann.

Bei einigen Materialien ist jedoch der Wärmeeintrag durch die Ultraschallschwingung auf einen engen Bereich in der Nähe der Kontaktfläche zur Sonotrode 3 beschränkt. Dies liegt zum einen an der im allgemeinen mit dem Abstand zur Sonotrode exponentiell abfallenden Absorption. Zum anderen zeigen diese Materialien nur eine geringe Wärmeleitfähigkeit, so dass die Erwärmung zunächst im wesentlichen auf einen Abschnitt in unmittelbarer Umgebung der Sonotrode beschränkt bleibt. Wenn nun des weiteren das umzuformende Werkstück aus einem Material besteht, welches einen stark temperaturabhängigen Absorptionskoeffizienten derart aufweist, dass der Absorptionskoeffizient mit der Temperatur größer wird, wird die Absorption in dem Bereich unmittelbar in der Umgebung der Sonotrode durch die lokale Erwärmung noch weiter verstärkt, was zu einer noch stärker lokalisierten Erwärmung führt.

Bei dem bekannten Verfahren kann daher nur ein Bereich in unmittelbarer Umgebung zur Sonotrode ausreichend erwärmt werden, so dass auch nur in diesen Bereichen eine effektive Umformung erfolgt.

Wie insbesondere in Figur 1c zu erkennen ist, weist der auf diese Art erzeugte Schließkopf 5 zylinderförmige Einschnürungen 4 und sehr große Bereiche, die tatsächlich nicht homogen mit dem Niet verbunden sind, sondern nur um den Zylinder gelegt sind, auf. Diese Bereiche reduzieren die Stabilität des Schließkopfes 5. In der Praxis müssen daher die auf diese Art erzeugten Schließköpfe größer dimensioniert sein, als dies grundsätzlich aufgrund ihrer Geometrie notwendig wäre. Doch selbst dann ist nicht immer eine ausreichende Festigkeit gewährleistet.

Die Dokumente JP 10 230378 A, JP 61197223 A, JP 62071623 A und JP 1210329 A zeigen verschiedene Ultraschallbearbeitungsverfahren.

Ausgehend von dem beschriebenen Stand der Technik ist es daher Aufgabe der vorliegenden Erfindung, ein Verfahren zum Umformen eines Werkstückes bereitzustellen, das insbesondere beim Umformen von Materialien mit einer stark temperaturabhängigen Dämpfungskonstante, die oben erwähnten Nachteile vermeidet.

Diese Aufgabe wird durch ein Verfahren gemäß Anspruch 1 gelöst.

Erwärmt man beispielsweise in der in Figur 1a gezeigten Situation den Niet 1 in dem Bereich, in dem er durch das Nietgut 2 geführt wird, so kann, bei Verwendung eines geeigneten Materials, beim Aufbringen einer Ultraschallschwingung auf den Niet 1 mittels der Sonotrode die Ultraschallschwingung zu einem erhöhten Anteil in dem erwärmten Abschnitt absorbiert werden, sodass die Umformung nicht oder nicht nur im Bereich der Sonotrode, sondern auch in dem erwärmten Bereich erfolgt.

Die der Erfindung zu Grunde liegende Idee ist es, den temperaturabhängigen Absorptionskoeffizienten für eine gleichmäßigere Erwärmung des Werkstückes mittels Ultraschall auszunutzen.

Durch Vorsehen eines Temperaturgradienten innerhalb des umzuformenden Werkstückes, d.h. durch das Vorsehen eines ersten Abschnittes des Werkstückes, der eine andere Temperatur hat, als ein zweiter Abschnitt, der mit dem Umformwerkzeug in Kontakt tritt, kann gezielt der Abschnitt ausgewählt werden, der eine besonders hohe- oder gegebenenfalls eine besonders niedrige-Absorption von Ultraschallschwingungen zeigen soll, sodass mit Hilfe der Sonotrode ganz gezielt bestimmte Abschnitte des Werkstücks erwärmt werden können.

Erfindungsgemäß wird der erste Abschnitt bevor die Umformungskraft auf das Werkstück aufgebracht wird, auf eine Temperatur gebracht wird, die höher ist als die Temperatur des zweiten Abschnittes. Dabei beträgt der Temperaturunterschied vorzugsweise mindestens 10°C und besonders bevorzugt mindestens 20°C. Dabei versteht es sich, dass weder der erste noch der zweite Abschnitt eine homogene Temperatur aufweisen, da sich immer aufgrund der endlichen Wärmeleitfähigkeit ein gewisser Temperaturunterschied innerhalb des Abschnittes ausbildet, sobald eine Temperaturerwärmung von außen initiiert wird.

Der einzustellenden optimale Temperaturunterschied hängt von dem Material des zu bearbeitenden Werkstückes ab. Besonders bevorzugt wird daher der erste Abschnitt des Werkstückes auf eine Temperatur gebracht, die sich von der Temperatur des ersten Abschnittes unterscheidet, sodass der Dämpfungsfaktor oder Absorptionskoeffizient in dem ersten Abschnitt um mindestens 5 % von dem Dämpfungsfaktor oder Absorptionskoeffizient des zweiten Abschnittes unterscheidet.

Das erfindungsgemäße Verfahren hat große Vorteile insbesondere bei dem Umformen von Werkstücken aus Kunststoff, vorzugsweise aus teilkristallinem Kunststoff. Beispiele hierfür sind PA6, PA12 und PA66. Grundsätzlich zeigen sich jedoch bei allen teilkristallinen Hochleistungswerkstoffen große Vorteile des beschriebenen erfindungsgemäßen Verfahrens.

Grundsätzlich kann der erste Abschnitt auf beliebige Art auf eine Temperatur gebracht werden, die höher als die Temperatur des zweiten Abschnittes ist. In einer besonders bevorzugten Ausführungsform ist jedoch vorgesehen, dass der erste Abschnitt mit Hilfe einer aufgeprägten Ultraschallschwingung auf eine höhere Temperatur gebracht wird.

So könnte beispielsweise in Figur 1a das Nietgut 2 mit einer Ultraschallschwingung beaufschlagt werden, sodass der Niet 1 in dem Abschnitt, der in der Durchgangsöffnung des Nietguts 2 angeordnet ist, an seiner Umfangsfläche erwärmt wird. Wird dann in einem weiteren Schritt die Sonotrode 3 in Richtung auf den Niet 1 bewegt, so wird eine durch die Sonotrode 2 in den Niet 1 eingebrachte Ultraschallschwingung in erhöhtem Maße im ersten Abschnitt, der auf eine höhere Temperatur gebracht wurde, absorbiert, sodass hier eine effektive Umformung erfolgen kann.

Alternativ dazu kann das Werkstück auch als Hohlniet und am besten als Teilhohlniet ausgebildet sein, da dann die Erwärmung des ersten Abschnittes im Wesentlichen im Inneren des Nietes, nämlich über die sich über einen Teil oder über den kompletten Niet erstreckende Ausnehmung erfolgen.

Beispielsweise kann das Umformwerkzeug eine Stauchfläche, über die die Umformkraft auf das Werkstück aufgebracht wird, und einen über die Stauchfläche vorstehenden Dorn aufweisen, über den Wärme in den ersten Abschnitt des Werkstückes eingebracht wird. Dieser Dorn kann entweder eine Heizvorrichtung aufweisen oder kann mit einer Ultraschallschwingung beaufschlagt werden, sodass Wärme über die Ultraschallschwingung in das Werkstück übertragen werden kann.

Das erfindungsgemäße Verfahren kann durchgeführt werden durch eine Vorrichtung zum Umformen eines Werkstücks mit einem als Sonotrode ausgebildeten Umformwerkzeug, das derart ausgelegt ist, dass es mit einem umzuformenden Werkstück in Kontakt gebracht werden kann und eine Umformkraft auf das Werkstück aufgebracht werden kann. Dabei weist die Vorrichtung einen Transducer zur Erzeugung einer Ultraschallschwingung auf, der gegebenenfalls über einen Amplitudentransformator mit dem Umformwerkzeug verbunden ist. Weiterhin ist erfindungsgemäß eine Vorrichtung zum Erwärmen und/oder Abkühlen eines ersten Abschnittes des umzuformenden Werkstücks und zum Ausbilden eines Temperaturgradienten zwischen dem ersten Abschnitt und einem mit dem Umformwerkzeug in Kontakt tretenden zweiten Abschnitt des Werkstücks vorgesehen.

Der Transducer wandelt eine elektrische Wechselspannung in eine mechanische Schwingung um. In der Regel werden hier Piezoelemente verwendet. Grundsätzlich sind Ultraschallschwingeinheiten bestehend aus einem Transducer und einer gegebenenfalls über einen Amplitudentransformator damit verbundenen Sonotrode bekannt, sodass es einer detaillierten Erläuterung an dieser Stelle nicht bedarf.

Das Umformwerkzeug weist vorzugsweise eine Stauchfläche auf, über die eine Umformkraft auf das umzuformende Werkstück aufgebracht werden kann.

Weiterhin ist in einer bevorzugten Ausführungsform vorgesehen, dass das Umformwerkzeug einen Dorn aufweist, der vorzugsweise über die Stauchfläche vorsteht, wobei der Dorn erhitzt oder mit einer Ultraschallschwingung beaufschlagt werden kann. Dabei dient der Dorn als Vorrichtung zum Erwärmen des ersten Abschnittes des umzuformenden Werkstückes.

Das Umformwerkzeug kann als Schließkopfformer zum Umformen eines als Niet ausgebildeten Werkstücks ausgebildet sein.

Weiterhin kann ein Teilhohlniet vorgesehen sein, der an seiner den Schließkopf bildenden Seite eine nicht durch den gesamten Niet verlaufende Ausnehmung aufweist. Im Grunde genommen bildet der Teilhohlniet eine Art Tasche, in die der Dorn eingeführt wird, sodass der Dorn die Innenflächen der Tasche und die daran angrenzenden Bereiche erhitzt, bevor die Stauchfläche eine Umformkraft auf das Werkstück ausübt.

Bei dem bekannten Stauchnietverfahren muss die Stauchfläche der Sonotrode, d.h. die Nietform immer exakt an das Material angepasst werden. Erfolgt dies nicht, so kommt es zu Austrieb oder nicht vollständig ausgeformten Nietköpfen ohne Festigkeit.

Der Austrieb ist in vielen Bereichen ein großes Problem, da Partikel Schäden an anderen kritischen, wie z.B. elektronischen Bauteilen oder Schaltelementen, verursachen können.

Ferner ist der optische Eindruck bei Sichtteilen ebenfalls nicht zu vernachlässigen. Ein schlecht ausgeformter Nietkopf und ein Nietkopf mit zu viel Austrieb wird in Sichtbereichen aus rein optischen Gründen häufig nicht akzeptiert.

Durch das beschriebene Verfahren kann ein Austrieb selbst bei einer nicht angepassten Stauchfläche nahezu vollständig vermieden werden.

Dadurch ist die Sonotrode einfacher herzustellen.

Weitere Vorteile, Merkmale und Anwendungsmöglichkeiten der vorliegenden Erfindung werden deutlich anhand der folgenden Beschreibung bevorzugter Ausführungsformen. Es zeigen:
Figuren 1a bis 1c ein Umformverfahren des Standes der Technik,
Figur 2 eine erste Ausführungsform einer Sonotrode zur Durchführung der Erfindung,
Figur 3 ein Niet,
Figuren 4a bis 4c schematische Darstellungen der einzelnen Schritte des erfindungsgemäßen Verfahrens und
Figuren 5 bis 7 alternative Ausführungsformen von Sonotroden zur Durchführung der Erfindung.

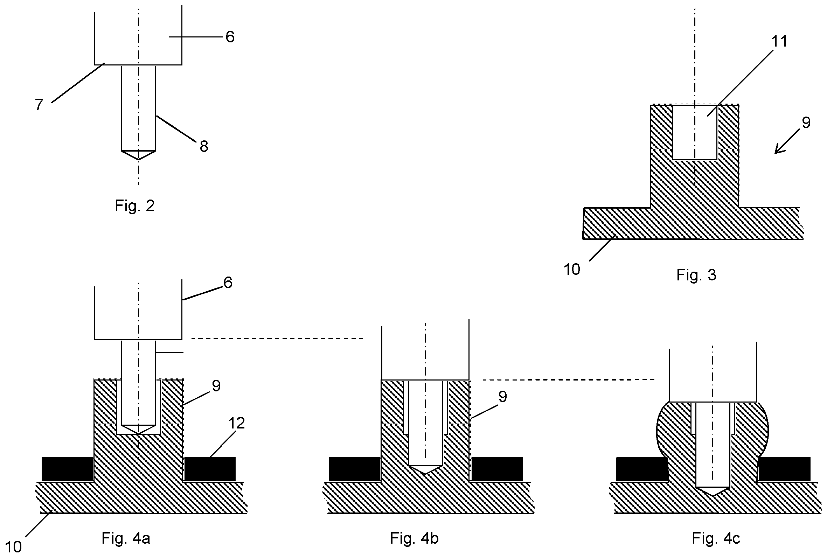

In Figur 2 ist eine spezielle Ausführungsform einer Sonotrode 6 gezeigt. Die Sonotrode 6 weist eine Stauchfläche 7 sowie einen über die Stauchfläche 7 hervorstehenden Dorn 8 auf. Der Dorn 8 ist im Wesentlichen zylinderförmig ausgebildet, hat jedoch eine konusförmige Spitze.

In Figur 3 ist ein Niet 9 dargestellt. Der Niet 9 weist einen Setzkopf 10 sowie eine Ausnehmung 11 auf, die nicht durch den gesamten Niet 9 verläuft.

Selbstverständlich kann statt dem Vorsehen eines Setzkopfes 10 der Niet 9 auch direkt mit einem Material verbunden sein, welches durch das Nietverfahren mit dem Nietgut 12 verbunden werden soll. Wie in den Figuren 4a bis 4c zu erkennen ist, wird zunächst der Niet 9 durch eine Öffnung im Nietgut 12 gesteckt bis der Setzkopf 10 am Nietgut 12 anliegt.

Dann wird die Sonotrode 6 in Richtung des Niets 9 bewegt, sodass der Dorn 8 in die Ausnehmung 11 im Niet 9 tritt. In der in Figur 4a gezeigten Situation ist der Dorn 8 lediglich an seiner konusförmigen Spitze in Kontakt mit dem Niet und zwar am Boden der Ausnehmung 11. Da die Sonotrode 6 eine Ultraschallschwingung ausführt, wird diese Ultraschallschwingung in dem Berührpunkt zwischen Dorn einerseits und Ausnehmungsgrund des Nietes 9 andererseits in den-Niet 9 übertragen. Es kommt somit zu einer lokalen Erwärmung des Nietes 9 in unmittelbarer Umgebung zu der Kontaktfläche.

Wie in Figur 4b zu erkennen ist, wird die Sonotrode 6 dann weiter in Richtung des Nietes bewegt, sodass der Dorn 8 in den Niet eindringt und nun auch mit einem Teil seiner Außenfläche Ultraschallschwingungen in den Niet 9 überträgt, sodass dann ein relativ großer Abschnitt innerhalb des Niets 9 erwärmt wird.

Tritt nun, wie in Figur 4c gezeigt ist, die Sonotrode 6 mit ihrer Stauchfläche 7 mit dem Niet 9 in Kontakt und wird eine Umformungskraft aufgebracht, so erfolgt die Umformung bevorzugt in den Bereichen, in denen eine höhere Temperatur herrscht, was erfindungsgemäß der Bereich in unmittelbarer Umgebung zu dem Dorn 8 ist. Durch die erfindungsgemäße Maßnahme kann nun der Schließkopf ohne dass sich Einschnürungen ausbilden, gebildet werden.

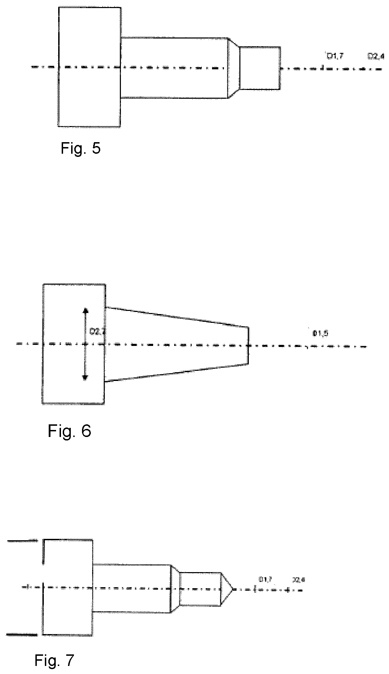

Die Darstellung der Figuren 4a bis 4c ist lediglich schematisch. Der Dorn, der an der Sonotrode 6 befestigt ist, kann unterschiedliche Geometrien aufweisen, so sind beispielsweise gestufte Ausbildungen, wie in Figur 5 gezeigt, kegelstumpfförmige Ausbildungen, wie in Figur 6 gezeigt, sowie Dorne mit gestuften Abschnitten und kegelförmiger Spitze, wie in Figur 7 gezeigt, in Betracht gezogen worden.

Je nach verwendeter Geometrie des Dornes kann es dann von Vorteil sein, wenn die entsprechende Ausnehmung im Teilhohlniet ebenfalls gestuft und/oder konusförmig ausgebildet ist.

### Bezugszeichenliste

- 1: Niet
- 2: Nietgut
- 3: Sonotrode
- 4: Einschnürung
- 5: Schließkopf
- 6: Sonotrode
- 7: Stauchfläche
- 8: Dorn
- 9: Niet
- 10: Setzkopf
- 11: Ausnehmung
- 12: Nietgut

## Patentansprüche

1. Verfahren zum Umformen eines Werkstücks, bei dem mittels eines Umformwerkzeuges eine Umformkraft auf das Werkstück ausgeübt wird und während oder vor dem Umformen des Werkstücks das Werkstück erwärmt wird, wobei die Erwärmung des Werkstückes durch die zumindest teilweise Absorption einer Ultraschallschwingung im Werkstück erfolgt, **dadurch gekennzeichnet, dass** bevor die Umformkraft auf das Werkstück aufgebracht wird, zumindest ein erster Abschnitt des Werkstücks auf eine Temperatur gebracht wird, die sich von der Temperatur eines mit dem Umformwerkzeug in Kontakt tretenden zweiten Abschnitts des Werkstücks unterscheidet, wobei der erste Abschnitt bevor die Umformkraft auf das Werkstück aufgebracht wird auf eine Temperatur gebracht wird, die höher, vorzugsweise um mindestens 10°C und besonders bevorzugt um mindestens 20°C, und am besten um mindestens 30° C, als die Temperatur des zweiten Abschnitts ist.

2. Verfahren nach Anspruch 1, **dadurch gekennzeichnet, dass** ein Werkstück aus Kunststoff, vorzugsweise aus einem teilkristallinen Kunststoff umgeformt wird.

3. Verfahren nach einem der Ansprüche 1 bis 2, **dadurch gekennzeichnet, dass** ein als Niet ausgebildetes Werkstück zur Ausbildung eines Schließkopfes umgeformt wird.

4. Verfahren nach einem der Ansprüche 1 bis 3, **dadurch gekennzeichnet, dass** zum Erwärmen des ersten Abschnitts auf eine Temperatur, die höher als die Temperatur des zweiten Abschnitts ist, dem ersten Abschnitt eine Ultraschallschwingung aufgeprägt wird.

5. Verfahren nach Anspruch 3 oder 4, **dadurch gekennzeichnet, dass** als Werkstück ein Hohlniet und vorzugsweise ein Teilhohlniet verwendet wird.

6. Verfahren nach einem der Ansprüche 3 bis 5, **dadurch gekennzeichnet, dass** das Umformwerkzeug eine Stauchfläche aufweist, die während des Umformens mit dem Werkstück in Kontakt gebracht wird und über die eine Kraft auf das Werkstück aufgebracht wird, wobei das Umformwerkzeug weiterhin einen über die Stauchfläche vorstehenden Dorn aufweist, über den Wärme in den ersten Abschnitt des Werkstückes eingebracht wird.

## Claims

1. A method of reshaping a workpiece, in which a reshaping force is exerted on the workpiece by means of a reshaping tool and the workpiece is heated during or before reshaping of the workpiece, wherein heating of the workpiece is effected by at least partial absorption of an ultrasonic vibration in the workpiece, **characterised in that** before the reshaping force is applied to the workpiece at least a first portion of the workpiece is brought to a temperature which differs from the temperature of a second portion of the workpiece, that comes into contact with the reshaping tool, wherein before the reshaping force is applied to the workpiece the first portion is brought to a temperature which is higher than the temperature of the second portion, preferably by at least 10°C and particularly preferably by at least 20°C and best by at least 30°C.

2. A method as set forth in claim 1 **characterised in that** a workpiece of plastic, preferably a part-crystalline plastic, is reshaped.

3. A method as set forth in one of claims 1 through 2 **characterised in that** a workpiece in the form of a rivet is reshaped to form a closing head.

4. A method as set forth in one of claims 1 through 3 **characterised in that** an ultrasonic vibration is applied to the first portion to heat the first portion to a temperature higher than the temperature of the second portion.

5. A method as set forth in claim 3 or claim 4 **characterised in that** a hollow rivet and preferably a part-hollow rivet is used as the workpiece.

6. A method as set forth in one of claims 3 through 5 **characterised in that** the reshaping tool has an upsetting surface which is brought into contact with the workpiece during the reshaping operation and by way of which a force is applied to the workpiece, wherein the reshaping tool further has a bar which projects beyond the upsetting surface and by way of which heat is introduced into the first portion of the workpiece.

## Revendications

1. Procédé de formage d'une pièce, consistant à exercer une force de déformation sur la pièce à l'aide d'un outil de formage et à chauffer la pièce avant ou pendant le formage de la pièce, le chauffage de la pièce étant effectué par l'absorption au moins partielle d'une vibration ultrasonore dans la pièce, **caractérisé en ce qu'**au moins une première partie de la pièce est portée, avant l'application de la force de déformation sur la pièce, à une température différente de la température d'une seconde partie de la pièce entrant en contact avec l'outil de formage, la première partie étant portée, avant l'application de la force de déformation sur la pièce, à une température qui est supérieure, de préférence d'au moins 10°C et de façon particulièrement préférée d'au moins 20°C et au mieux d'au moins 30°C, à la température de la seconde partie.

2. Procédé selon la revendication 1, **caractérisé en ce qu'**est formée une pièce en matière plastique, de préférence en matière plastique partiellement cristalline.

3. Procédé selon l'une des revendications 1 à 2, **caractérisé en ce qu'**est formée une pièce réalisée sous forme de rivet pour la formation d'une tête de fermeture.

4. Procédé selon l'une des revendications 1 à 3, **caractérisé en ce que**, pour chauffer la première partie à une température supérieure à la température de la seconde partie, une vibration ultrasonore est appliquée à la première partie.

5. Procédé selon la revendication 3 ou 4, **caractérisé en ce que** l'on utilise en tant que pièce un rivet creux, et de préférence un rivet partiellement creux.

6. Procédé selon l'une des revendications 3 à 5, **caractérisé en ce que** l'outil de formage présente une surface de refoulement qui est mise en contact avec la pièce pendant le formage et par l'intermédiaire de laquelle une force est appliquée sur la pièce, l'outil de formage comportant, en outre, un mandrin faisant saillie de la surface de refoulement, par lequel la chaleur est introduite dans la première partie de la pièce.
